# EUROPÄISCHE PATENTSCHRIFT

(11) **EP 3 554 900 B1**
(45) Veröffentlichungstag und Bekanntmachung des Hinweises auf die Patenterteilung: **05.01.2022**
(21) Anmeldenummer: 17809251.6
(22) Anmeldetag: 29.11.2017
(51) Int. Cl.: B60T 8/172

(54) **VERFAHREN ZUM SCHÄTZEN EINES REIBWERTS EINER FAHRBAHN MITTELS EINES KRAFTFAHRZEUGS SOWIE STEUERVORRICHTUNG**
METHOD FOR ESTIMATING A FRICTION COEFFICIENT OF A ROADWAY BY MEANS OF A MOTOR VEHICLE AND CONTROL DEVICE
PROCÉDÉ POUR ESTIMER UN COEFFICIENT DE FROTTEMENT D'UNE CHAUSSÉE AU MOYEN D'UN VÉHICULE À MOTEUR ET DISPOSITIF DE COMMANDE

(30) Priorität: 16.12.2016 DE 102016225352
(43) Veröffentlichungstag der Anmeldung: 23.10.2019
(73) Patentinhaber: Volkswagen Aktiengesellschaft, 38440 Wolfsburg (DE)
(72) Erfinder: BÄRECKE, Frank, 38444 Wolfsburg (DE)
(86) Internationale Anmeldenummer: PCT/EP2017/080822
(87) Internationale Veröffentlichungsnummer: WO 2018/108533

(56) Entgegenhaltungen:
- EP-A2- 1 197 408
- WO-A1-2011/054363
- WO-A1-2015/074744
- DE-A1- 19 855 332
- DE-A1-102012 112 724
- DE-A1-102012 112 725
- US-A1- 2015 166 072

## Beschreibung

Die Erfindung betrifft ein Verfahren, um mittels eines Kraftfahrzeugs oder aus einem Kraftfahrzeug heraus einen Reibwert einer Fahrbahn zu schätzen. Das Verfahren wird von einer Steuervorrichtung durchgeführt, die ebenfalls Teil der Erfindung ist. Schließlich gehört zu der Erfindung auch ein Kraftfahrzeug mit der erfindungsgemäßen Steuervorrichtung.

Das Schätzen eines Reibwerts einer Fahrbahn ist in der DE 10 2009 041 566 A1 beschrieben. Daraus geht hervor, dass die Kenntnis oder eine Schätzung des Reibwerts nützlich ist, um ein Fahrdynamikregelungssystem, beispielsweise ein Schlupfregelsystem (ESC - Electronic Stability Control), betreiben zu können. Eine Reibwertinformation wird gemäß der Druckschrift auch auf der Grundlage von Karten und Positionsdaten ermittelt. Des Weiteren ist bekannt, Schätzungen von Reibwerten in Klassen einzuteilen. Für den Fall, dass eine Fahrweise eines Fahrers dafür sorgt, dass Reifen des Kraftfahrzeugs an der Haftgrenze betrieben werden, also kurz vor dem Abrutschen sind, kann eine Schätzung für einen Reibwert mittels eines Schlupfregelsystems selbst erfolgen. Die Nutzung eines Schlupfregelsystems zum Schätzen des Reibwerts weist den Nachteil auf, dass innerhalb des Schlupfregelsystems eigentlich nur die maximal übertragbare Horizontalkraft eines Rades geschätzt werden kann und die zur Berechnung des Reibwerts nötige Vertikalkraft geschätzt wird, indem beispielsweise angenommen wird, dass die Fahrzeugmasse gleichmäßig auf alle vier Räder des Kraftfahrzeugs verteilt ist. Dies führt zu einer ungenauen Schätzung des Reibwerts. Ein weiterer Nachteil einer Schätzung des Reibwerts aus der Schlupfregelung liegt darin, dass der Reibwert erst im Nachhinein bestimmt werden kann, wenn das Kraftfahrzeug also die jeweilige Stelle auf der Fahrbahn schon überrollt hat.

Aus der DE 10 2013 211 027 A1 ist bekannt, eine reibwertmindernde Beschaffenheit einer Fahrbahnoberfläche, wie beispielsweise Schneebedeckung oder Matschansammlungen, mittels einer Kamera zu erkennen. Kamerabasierte Verfahren haben den Nachteil, dass diese nur teilweise valide Werte liefern, denn die Schätzung auf der Basis eines Kamerasystems ist sehr ungenau. Dafür liegt die Schätzung allerdings frühzeitig vor.

In Dokument EP 1 197 408 A2 ist beschrieben, dass in Abhängigkeit von einem geschätzten Reibwert einer Straße eine Hinterachslenkung gesteuert werden kann.

Aus dem Dokument WO 2011/054363 A1 ist bekannt, dass man ein Geschwindigkeitssignal eines Vorderrads und eines Hinterrads korrelieren kann, um hieraus eine Information über die Beschaffenheit des Straßenbelags zu erhalten. Der Verlauf der Einhüllenden des Korrelationssignals gibt Aufschluss darüber, welche Oberflächenbeschaffenheit vorliegt.

Das Dokument DE 198 55 332 A1 beschreibt die Schätzung eines Werts der maximal auf die Straße übertragbaren Kraft auf der Grundlage von Messungen an einem einzelnen Rad.

In dem Dokument DE 10 2012 112 724 A1 ist beschrieben, von einem Kraftfahrzeug aus mittels einer Kamera die Beschaffenheit eines vorausliegenden Straßenbelags zu schätzen, um das Kraftfahrzeug auf das Überfahren vorausliegender Straßenbereiche vorzubereiten.

In den Dokument DE 10 2012 112 725 A1 ist beschrieben, dass man Kamerabilder mit Schätzwerten für den Reibwert einer Straße verknüpfen kann, um die reifenbasierte Schätzung des Reibwert auf der Grundlage der Kamerabilder zu unterstützen.

In den Dokument US 2015/0166072 A1 ist eine modellbasierte Schätzung der Hafteigenschaft eines Straßenbelags beschrieben, wodurch ermöglicht ist, dass kontinuierlich neue Messwerte mit bereits bestehenden Messungen aggregiert werden können.

In dem Dokument WO 2015/074744 A1 ist beschrieben, dass bei der Schätzung eines Reibwerts auch ein Vertrauenswert erzeugt werden kann, welcher die Qualität der aktuellen Schätzung beschreibt. Eine weitere Möglichkeit der Korrektur eines Schätzwerts besteht in der Angabe einer Klasse der aktuell vorliegenden Umgebung.

Der Erfindung liegt die Aufgabe zugrunde, in einem Kraftfahrzeug eine Schätzung eines Reibwerts einer Fahrbahn bereitzustellen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist das besagte Verfahren zum Schätzen eines Reibwerts einer Fahrbahn bereitgestellt, das "onboard", d.h. mittels einer Steuervorrichtung eines Kraftfahrzeugs, ausgeführt werden kann. Wie bereits im Zusammenhang mit dem Stand der Technik beschrieben, empfängt die Steuervorrichtung aus einem Schlupfregelsystem, beispielsweise einem ESC, einen Schätzwert einer maximal mit einem Rad des Kraftfahrzeugs auf die Fahrbahn übertragbaren Horizontalkraft. Dieser Schätzwert wird hier als erster Schätzwert bezeichnet, da nachfolgend ein zweiter Schätzwert eingeführt wird. Die maximal übertragbare Horizontalkraft wird auch als Horizontalkraftpotential bezeichnet.

Wie bereits ausgeführt, lässt sich mit der maximal übertragbaren Horizontalkraft zwar ebenfalls ein Reibwert durch das Schlupfregelsystem schätzen. Dieser basiert aber darauf, dass die wirkende Vertikalkraft aus einer groben Schätzung bezogen auf die Fahrzeugmasse verteilt auf die vier Räder des Kraftfahrzeugs beruht.

Um diese grobe Schätzung vermeiden zu können, ist erfindungsgemäß vorgesehen, dass die Steuervorrichtung aus einer Dämpferregelung des Kraftfahrzeugs den besagten zweiten Schätzwert empfängt, der die Radaufstandskraft des Rads angibt. Die Radaufstandskraft ist diejenige Kraft, die zwischen dem Reifen des Rads und der Oberfläche der Fahrbahn wirkt. Es ist also die aktuelle oder tatsächlich wirkende Vertikalkraft, die nicht auf einer Schätzung beruht. Indem die Steuervorrichtung also das Schlupfregelsystem mit der Dämpferregelung kombiniert oder verknüpft, kann sowohl ein Schätzwert für die Horizontalkraft als auch ein Schätzwert für die Vertikalkraft oder Radaufstandskraft genutzt werden, die beide nicht auf einer groben, situationsunabhängigen Annahme beruhen, sondern die aktuelle Fahrsituation berücksichtigen. Den Reibwert berechnet die Steuervorrichtung dann anhand dieser beiden Schätzwerte, das heißt aus der Radaufstandskraft und der Horizontalkraft. Dieser Reibwert ist zudem fahrzeugunabhängig gültig, das heißt er kann auch für andere Kraftfahrzeuge (sog. Fremdfahrzeuge) mit anderer Fahrzeugmasse und/oder Bereifung genutzt werden, um beispielsweise eine Prädiktion der maximal verfügbaren Horizontalkraft zu ermöglichen.

Eine Dämpferregelung kann den besagten Schätzwert der Radaufstandskraft beispielsweise wie folgt ermitteln. Es kann zum einen berücksichtigt werden, welche Kraft von dem Fahrzeugaufbau des Kraftfahrzeugs, also dem gefedert gelagerten Teil des Kraftfahrzeugs, auf das Rad wirkt. Diese Kraft wird über den Dämpfer oder das Federbein von dem Fahrzeugaufbau auf das Rad übertragen. Hierbei wirkt eine Federkraft einer Feder des Dämpfers. Die Federkraft kann in Abhängigkeit von dem Einfederweg oder Dämpferweg des Dämpfers ermittelt werden. Des Weiteren wirkt eine Dämpferkraft, die in Abhängigkeit von einer zeitlichen Änderung des Einfederwegs anhand der Dämpferhärte ermittelt werden kann. Ein weiterer Krafteintrag des Fahrzeugaufbaus kann durch einen Wankstabilisator auf das Rad übertragen werden. Aus der Federkraft, der Dämpferkraft und der Wankstabilisatorkraft kann somit die auf das Rad vom Fahrzeugaufbau her insgesamt wirkende Kraft ermittelt werden, die hier als Fahrzeugaufstandskraft auf das Rad bezeichnet ist. Demgegenüber kann eine Beschleunigungskraft wirken, wenn das Rad während einer Fahrt, beispielsweise durch eine Unebenheit, aufgeworfen oder hochgeschleudert wird oder in ein Schlagloch absinkt. Hierzu kann ebenfalls die zeitliche Änderung des Einfederwegs ermittelt werden. Um hierbei zwischen einer Bewegung des Rades selbst und einer Bewegung des Fahrzeugaufbaus zu unterscheiden, kann ein Signal eines Beschleunigungssensors des Fahrzeugaufbaus genutzt werden. Hieran kann eine Bewegung des Rads selbst erkannt werden, falls z.B. der Fahrzeugaufbau unbeschleunigt bleibt. Aus der zeitlichen Änderung der Bewegungsgeschwindigkeit des Rads ergibt sich die Beschleunigung des Rads und auf Grundlage einer Angabe zur Radmasse kann dann die auf das Rad wirkende Beschleunigungskraft ermittelt werden. Nun fehlt lediglich die Radaufstandskraft des Rads auf der Fahrbahn. Denn die Summe all der genannten Kräfte muss Null ergeben (Kräftegleichgewicht), sodass die fehlende Größe, nämlich die Radaufstandskraft, aus diesem Gleichungssystem berechnet werden kann.

Somit kann also die Dämpferregelung eine Schätzung der Radaufstandskraft bereitstellen, die zusammen mit der aus dem Schlupfregelsystem bereitgestellten Horizontalkraft genutzt werden kann, um den fahrzeugunabhängigen Reibwert zu berechnen.

Während einer Fahrt kann auch innerhalb des Kraftfahrzeugs eine Prädiktion bereitgestellt werden, das heißt eine Schätzung des Reibwerts, bevor ein Rad die entsprechende Stelle oder den entsprechenden Bereich des Fahruntergrunds erreicht. Hierzu ist vorgesehen, dass der Reibwert an einem Vorderrad des Kraftfahrzeugs ermittelt wird und als prädizierter Reibwert an eine Steuervorrichtung für ein Hinterrad des Kraftfahrzeugs übermittelt wird. Somit kann zumindest an dem Hinterrad die Steuervorrichtung im Voraus einen prädizierten Reibwert erhalten. Für Prädiktion des Reibwertes am Hinterrad kann dieser z.B. an eine Dämpferregelung übertragen werden. Mit den Radaufstandskräften der Dämpferregelung kann dann das Horizontalkraftpotential prädiziert werden.

Dies kann zum Beispiel genutzt werden, indem in einem Flächenbereich der Fahrbahn über das Vorderrad ein Reibwert kleiner als ein vorbestimmter Mindestwert erkannt wird, das heißt es wird erkannt, dass es glatt ist, und eine Lenkradsteuerung mit einem Lenksignal angesteuert wird, welches dazu ausgelegt ist, mit dem (nachfolgenden) Hinterrad diesen Flächenbereich unter Berücksichtigung des Reibwerts zu durchfahren oder zu umfahren.

Dies kann beispielsweise während eines Bremsmanövers genutzt werden, um den Bremsweg zu verkürzen. Allgemein wird also ein kritischer Flächenbereich (Reibwert kleiner als der Mindestwert) mit dem Hinterrad umfahren. Auf Basis der Prädiktion kann z.B. eine Hinterachslenkung vorgesteuert werden, um einen Kurs des Fahrzeuges konstant zu halten. Die Auswahl einer neuen Trajektorie für das Umfahren kann auf Basis von Kameradaten erfolgen. Nur diese stellen sicher, dass die Anomalie im Ausweichpfad nicht vorhanden ist. Durch Berücksichtigen des Reibwerts erfolgt insbesondere eine Ansteuerung einer Vorrichtung zur Fahrtrichtungsvorgabe (z.B. Hinterachslenkung), um eine Spurabweichung bei Reibwertanomalie durch eine Radstellung auszugleichen.

Zu der Erfindung gehören auch optionale zusätzliche technische Merkmale, durch die sich weitere Vorteile ergeben.

Auf Grundlage des beschriebenen Messverfahrens kann ein weiterer Vorteil dadurch erzielt werden, dass auch erkannt wird, falls das Rad überhaupt keine Haftung oder nur eine geringere Haftung auf der Straße aufweist, weil das Rad beispielsweise gerade über ein Schlagloch fährt und deshalb beispielsweise kurzzeitig in der Luft schwebt, also gar keine Haftung hat. Hierzu wird vorgesehen, dass der Reibwert, der geschätzt oder berechnet worden ist, verworfen oder die Berechnung des Reibwerts sogar ganz unterlassen wird, falls der besagte Schätzwert der Radaufstandskraft (zweiter Schätzwert) kleiner als ein vorbestimmter Mindestwert ist. Falls also die Radaufstandskraft derart gering ist, dass sie auf ein nicht vollständig auf der Fahrbahn aufliegendes oder aufgestütztes Rad hindeutet, also kleiner als der vorbestimmte Mindestwert ist, wird davon ausgegangen, dass auch der Reibwert zu verwerfen ist oder nicht zu berechnen ist, weil er nicht die Reibeigenschaft der Fahrbahn repräsentiert.

Die Steuervorrichtung kann auch lernend ausgestaltet sein. Hierzu kann vorgesehen sein, dass die Steuervorrichtung aus einer Umgebungserfassungseinrichtung eine Klassenangabe einer Untergrundklasse eines Fahruntergrunds der Fahrbahn empfängt. Die Umgebungserfassungseinrichtung kann als Untergrundklasse beispielsweise zwischen einer "Bitumendecke" und einem "Sandweg" und "Schotter" und "Kopfsteinpflaster" unterscheiden, um nur Beispiele zu nennen. Die Klassenangabe gibt dann den aktuell erkannten Fahruntergrund an. Die Steuervorrichtung kann des Weiteren den berechneten Reibwert in einem Datenspeicher getrennt nach Untergrundklasse als statistischen Reibwert abspeichern. Statistisch ist der Reibwert deshalb, weil er kontinuierlich rekursiv aktualisiert wird, indem bei einer Fahrt über eine weitere Fahrbahn, zu der die Umgebungserfassungseinrichtung dieselbe Untergrundklasse signalisiert, erneut einen Reibwert schätzt und mit diesem neuen Reibwert den bereits gespeicherten statistischen Reibwert in dem Datenspeicher rekursiv aktualisiert. Hierzu kann beispielsweise eine rekursive Mittelung oder eine Mittelwertberechnung vorgesehen sein. Für jede Untergrundklasse wird somit separat der statistische Reibwert rekursiv verbessert oder konkretisiert oder präzisiert. Wie bereits ausgeführt, kann diese statistische Verknüpfung als Mittelwert, gleitender Mittelwert oder rekursive Glättung vorgenommen oder durchgeführt werden, um nur Beispiele zu nennen. Durch die nach Untergrundklassen getrennte Speicherung ist dabei verhindert, dass sich die Reibwerte unterschiedlicher Fahruntergründe, beispielsweise Sandweg einerseits und Bitumen andererseits, überlagern oder vermischen oder beeinflussen.

Um die besagte Klassenangabe zu erzeugen, also die Untergrundklasse zu erkennen, kann vorgesehen sein, dass die Umgebungserfassungseinrichtung eine Bildverarbeitungseinheit aufweist, die beispielsweise den vorausliegenden Fahruntergrund mittels einer Kamera erfasst. Die Bildverarbeitungseinheit erfasst den Fahruntergrund somit optisch und klassifiziert ihn. Beispielsweise kann die Klassifizierung auf der Grundlage eines Mustervergleichs mit bekannten Bildmustern oder Texturen und/oder Farben von Fahruntergründen unterschiedlicher Untergrundklasse erfolgen. Hierzu kann beispielsweise ein Hidden-Markov-Modell (HMM) und/oder ein künstliches neuronales Netz für die Bildanalyse der Kamerabilder genutzt werden.

Ein Vorteil des Abspeicherns eines statistischen Reibwerts besteht auch darin, dass nun auch eine Prädiktion des Reibwerts beispielsweise für ein Vorderrad des Kraftfahrzeugs bereitgestellt werden kann, also nicht erst ein Bereich der Fahrbahn überrollt werden muss, um im Nachhinein einen Reibwert zu berechnen. Hierzu kann anhand des in den Datenspeicher gespeicherten Reibwerts und der Radaufstandskraft, wie sie als zweiter Schätzwert von der Dämpferregelung bereitgestellt wird, ein Wert einer maximal verfügbaren Horizontalkraft, also ein Wert des Potenzials der Horizontalkraft, berechnet werden und dieser Wert dem Schlupfregelsystem als Prädiktion bereitgestellt werden. Das Schlupfregelsystem empfängt also vor dem Überrollen eines bestimmten Bereichs der Fahrbahn zu diesem Bereich einen Wert der maximal verfügbaren Horizontalkraft, und kann im Nachhinein den dann festgestellten Wert der maximal verfügbaren Horizontalkraft in der bereits beschriebenen Weise ebenfalls bereitstellen.

Der beschriebene statistische Reibwert im Datenspeicher muss nicht unbedingt auf einen zuverlässigen, korrekten Reibwert konvergieren. Um dies auszuwerten, ist bevorzugt vorgesehen, dass in den Datenspeicher in jeder Untergrundklasse zu deren Reibwert auch ein Vertrauenswert bereitgestellt ist. Dieser Vertrauenswert gibt eine Streuung der in dem statistischen Reibwert berücksichtigten Reibwerte und/oder ein Konfidenzmaß der Klassenschätzung der Untergrundklasse der einzelnen Reibwerte an. Die Streuung kann beispielsweise als statistische Varianz angegeben sein. Das Konfidenzmaß der Klassenschätzung kann beispielsweise aus dem Klassifikator, also beispielsweise dem besagten HMM oder künstlichen neuronalen Netz, in an sich bekannter Weise ermittelt werden. Der statistische Reibwert aus dem Datenspeicher wird dann zusammen mit seinem Vertrauenswert bereitgestellt, sodass ein den Reibwert nutzendes Gerät oder System, beispielsweise das Schlupfregelsystem, anhand des Vertrauenswerts erkennt, wie zuverlässig der statistische Reibwert geschätzt wurde. Der statistische Reibwert zusammen mit seinem Vertrauenswert kann auch an einen fahrzeugexternen Empfänger, beispielsweise an ein Fremdfahrzeug und/oder eine stationäre Datenbank beispielsweise im Internet bereitgestellt werden. Aus einer Datenbank beispielsweise des Internets können dann weitere Fremdfahrzeuge den Reibwert jeder Untergrundklasse auslesen oder abfragen. Hierdurch können auch diese fahrzeugexternen Empfänger ihre Fahrzeugeigenschaften anpassen, was mit weniger Konvergenzzeit durchgeführt werden kann, da die statistischen Reibwerte nach Untergrundklassen getrennt bereitgestellt sind.

Eine Fahrbahn einer gegebenen Untergrundklasse, beispielsweise "Bitumen", kann noch aufgrund aktueller Umweltbedingungen, beispielsweise bei unterschiedlichen Temperaturen und/oder Feuchtegraden, unterschiedliche Reibwerte aufweisen. Deshalb ist bevorzugt vorgesehen, dass der gespeicherte statistische Reibwert vor einer Bereitstellung, also vor einer Nutzung durch ein anderes Gerät oder System, an eine durch zumindest ein Sensorsignal signalisierte, aktuelle Klimabedingung angepasst wird. Die Klimabedingung kann beispielsweise die Umgebungstemperatur und/oder eine Wetterangabe, beispielsweise "Regen" oder eine Niederschlagsmenge, sein. Es kann auch berücksichtigt werden, wie lange es her ist, dass der letzte Niederschlag gefallen ist und nun ein erster Niederschlag nach dieser Trockenperiode erkannt wird. Hierdurch kann auf das Vorhandensein eines Schmierfilms nach einer Regenpause und dann einsetzendem Regen rückgeschlossen werden und entsprechend der statistische Reibwert korrigiert werden.

Um das erfindungsgemäße Verfahren in einem Kraftfahrzeug durchführen zu können, ist durch die Erfindung eine Steuervorrichtung für ein Kraftfahrzeug bereitgestellt. Diese Steuervorrichtung kann beispielsweise als Steuergerät ausgestaltet sein. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu einen Mikroprozessor oder Mikrocontroller aufweisen. Das Verfahren kann auf der Grundlage eines Programmcodes für die Prozessoreinrichtung realisiert sein.

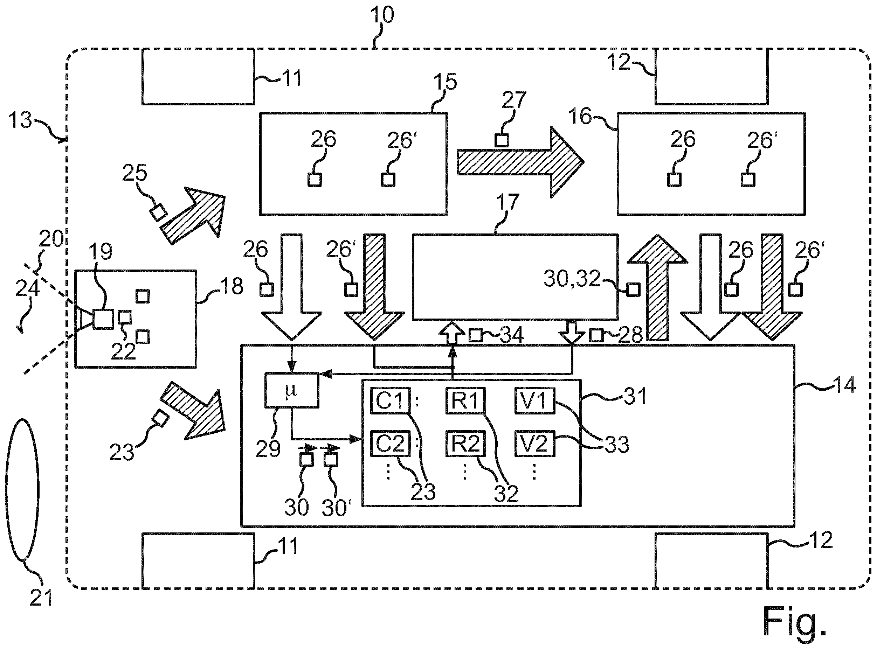

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10, bei dem es sich zum Beispiel um einen Kraftwagen, insbesondere einen Personenkraftwagen oder Lastkraftwagen, handeln kann. Dargestellt sind Vorderräder 11, Hinterräder 12, eine Fahrzeugfront 13 eine Steuervorrichtung 14, eine Dämpferregelung 15 für eine Vorderachse mit den Vorderrädern 11, eine Dämpferregelung 16 für eine Hinterachse mit den Hinterrädern 12, eine Schlupfregelung 17 und eine Umgebungserfassungseinrichtung 18 mit einer Kamera 19, die zur Fahrzeugfront 13 in ihren Erfassungsbereich 20 ausgerichtet hat.

In der Figur ist durch Pfeile eine Übertragung von Daten oder Werten zwischen den beschriebenen Komponenten veranschaulicht. Die schraffierten Pfeile geben hierbei eine Vorausschauinformation an, die bereits vorliegt, wenn ein jeweiliger Flächenbereich 21 der Fahrbahn noch nicht überrollt oder überfahren wurde, d.h. die Vorausschauinformation liegt vor, bevor der entsprechende Fahrbahnbereich 21 überfahren wird. Die Pfeile ohne Schraffur stellen eine Information zur Identifikation dar, wie sie vorliegt, nachdem der Fahrbahnbereich 21 überrollt oder überfahren wurde und den aktuellen Vorgang des Überfahrens berücksichtigt.

Die Umgebungserfassungseinrichtung 18 kann auf der Grundlage einer Bildverarbeitungseinheit 22 mittels der Kamera 19 eine Untergrundklasse 23 eines Fahrbahnuntergrunds der vorausliegenden Fahrbahn 24 ermitteln und der Steuervorrichtung 14 bereitstellen. Optional kann auf der Grundlage von Kamerabildern auch ein Höhenprofil 25 ermittelt und der Dämpferregelung 15 bereitgestellt werden. Das Bereitstellen eines Höhenprofils kann beispielsweise in der Weise erfolgen, wie es aus der eingangs genannten DE 10 2013 211 027 A 1 bekannt ist.

Die Dämpferregelung 15 kann für ein jeweiliges Vorderrad 11 eine Radaufstandskraft 26 ermitteln und optional aus dem Höhenprofil 25 eine prädizierte Radaufstandskraft 26' prädizieren oder vorausberechnen. Dies kann in bekannter Weise modellbasiert erfolgen. Aus einer Relativbewegung des Vorderrads 11 bezüglich des Fahrzeugaufbaus des Kraftfahrzeugs 10 kann optional ein Straßenprofil 27 ermittelt werden und der Dämpferregelung 16 bereitgestellt werden. Die Dämpferregelung 16 kann ihrerseits eine aktuelle Radaufstandskraft 26 und eine prädizierte Radaufstandskraft 26' beispielsweise modellbasiert vorausschauend ermitteln.

Die Schlupfregelung 17 kann auf der Grundlage einer Detektion eines Schlupfes eines Rads 11, 12 eine aktuelle maximale Horizontalkraft 28 in an sich bekannter Weise ermitteln.

Die Steuervorrichtung 14 kann auf der Grundlage der aktuellen maximalen Horizontalkraft 28 und der aktuellen Radaufstandskraft 26 durch eine Reibwertschätzung 29 den aktuellen Reibwert der unter dem Rad 11 befindlichen Fahrbahn 24 ermitteln. Der so geschätzte Reibwert 30 kann in einem Datenspeicher 31 unter der jeweils angegebenen aktuellen Untergrundklasse 23 (beispielsweise können Klassenangaben C1, C2 vorgesehen sein) mit einem in dem Datenspeicher 31 gespeicherten statistischen Reibwert 32 zu einem aktualisierten statistischen Reibwert 32 kombiniert werden. Zusätzlich kann ein Vertrauenswert 33 angegeben werden, welcher von einer Varianz der in dem jeweiligen statistischen Reibwert 32 berücksichtigten Reibwerte 30 abhängig sein kann. Der jeweilige statistische Reibwert 32 kann auf der Grundlage der ermittelten Untergrundklasse 23 auch aus dem Datenspeicher 31 ausgelesen und beispielsweise der Schlupfregelung 17 als Prädiktion bereitgestellt werden. Anstelle des Reibwerts 32 kann auch durch Kombinieren mit der prädizierten Radaufstandskraft 26' eine prädizierte maximale Horizontalkraft 34 der Schlupfregelung 17 als Prädiktion bereitgestellt werden. Mittels dieser Prädiktion kann in der Schlupfregelung 17 beispielsweise eine Plausibilisierung eines aktuell erkannten Maximalwerts der Horizontalkraft 28 plausibilisiert oder überprüft werden.

Der Reibwert 30 oder der statistische Reibwert 32 kann auch der Dämpferregelung 16 für die Hinterachse bereitgestellt werden, damit diese eine Dämpferregelung für Dämpfer der Hinterräder 12 prädiktiv einstellen oder vorbereiten kann.

Die Nutzung der aktuellen Radaufstandskraft 26 und/oder der prädizierten Radaufstandskraft 26' der Hinterräder 12 durch die Dämpferregelung 16 ermittelten, kann zur Verifikation der statistischen Reibwerte 32 ebenfalls durch Berechnen entsprechender Hinterachs-Reibwerte 30' durchgeführt werden.

Die beschriebenen Berechnungsverfahren erlauben eine Vielzahl von Steuermöglichkeiten in dem Kraftfahrzeug 10. So ergeben sich beispielsweise die folgenden Eingangsgrößen für die Reibwertschätzung:
Die Kamera erfasst als optischer Sensor die Fahrbahn. Anhand des optischen Fahrbahneindruck wird der Untergrund klassiert. Dies findet bereits vor der Überfahrt statt. Diese Klassierung des Untergrundes wird an den Reibwertschätzer gesendet. Später wird dort für jede Untergrundklasse ein individueller Reibwert gelernt.

Es kann mit der Kamera insbesondere eine plötzliche Änderung des Untergrundes sensiert werden. (z.B. trocken/nass; Asphalt/Kopfsteinpflaster; Sand, Laub). Hier liefert die Kamera Informationen, damit das Fahrzeug sich schnell auf einen neuen Reibwert einstellen oder eine kurzfristige Abweichung bei der Berechnung des Reibwertes auslassen kann.

Sofern die Sensorik es auflöst, wird optional das Fahrbahnprofil ermittelt. Das Fahrbahnprofil dient dann der Dämpferregelung zum Schätzen der zukünftigen Radaufstandskräfte.

Das Schlupfregelsystem (z.B. ESC/ESP, ESP - elektronisches Stabilitätsprogramm) kann in der Lage sein, aus dem Radschlupf und den übertragenen Kräften eine maximale Horizontalkraft und damit den Reibwert zu ermitteln. Da normalerweise die Radaufstandskraft nicht bekannt ist, wird aber in der Regel eine mittlere Radaufstandskraft bei der Berechnung angenommen. Ist der Reibwert bekannt, können Fahrmanöver Anhand der maximal übertragbaren Horizontalkraft abgestimmt werden. In erster Linie betrifft das die Begrenzung der radindividuellen Antriebs und Bremsmomente. Ein Identifizierter Reibwert gilt jedoch nur für die bereits überfahrene Fahrbahn. Die Gültigkeit für die Zukunft ist Aufgrund möglicher Untergrundänderungen oder Abweichungen in den Radaufstandskräften fraglich.

Bei dem Kraftfahrzeug 10 ergibt sich nun die Änderung, den identifizierten Reibwert oder die identifizierte maximale Horizontalkraft (Horizontalkraftpotential) nur als Rohwert an einen übergeordneten Reibwertschätzer in Form der Reibwertschätzung 29 zu übermitteln. Der Reibwertschätzer liefert nach einer Fusion mit Kameradaten und Radaufstandskraftschätzung einen Schätzwert für den Reibwert. Dieser wird dann für die Schlupfregelung verwendet.

Über die Sensorik der Dämpferregelung (DCC - Dynamik Chassis Control) wird eine Radaufstandskraft geschätzt. Diese Information liegt zeitlich leicht verzögert vor, da erst eine Filterung und eine Berechnung stattfinden müssen. Sie kann in der Schlupfregelung zur Reibwertschätzung verwendet werden.

Besitzt man für eine Achse Vorausschauinformationen über das zu überrollende Straßenprofil, so kann die Vertikaldynamik in einem Modell berechnet werden und die Radaufstandskraft vorausschauend ausgegeben werden. Die Vorausschauinformation kann dabei mit zusätzlicher Previewsensorik oder über eine Prädiktion z.B. der Vorderachsbewegung an die Hinterachse übermittelt werden.

Der Reibwertschätzer (Reibwertschätzung 29) kann radindividuell wir folgt vorgehen. Das Schlupfregelsystem liefert den identifizierten Reibwert oder die maximale Horizontalkraft als Rohwert für die Reibwertberechnung. Die Dämpferregelung liefert die aktuelle Radaufstandskraft. Die Kamera liefert aktuelle und zukünftige Untergrundklasse.

Das Lernen von Reibwerten erfolgt radindividuell durch Berechnen des finalen Reibwertes aus Rohwert und Radaufstandskraft. Dann erfolgt die Zuordnen der finalen Reibwertes zu der jeweiligen Untergrundklasse. Je nach Untergrundklasse erfolgt dann ein Lernen der neuen Reibwerte für die betroffenen Untergrundklassen. Die Ermittlung der Vertrauensbereiche für die gelernten Untergrundklassen kann anhand der Abweichung der Reibwerte gegenüber vorher gelernten Reibwerten und dem bisherigen Vertrauensbereich erfolgen. Eine Reduzierung der Vertrauensbereiche für alle nicht gelernten Messwerte kann aufgrund unzureichender Aktualität (veraltete Werte) ebenfalls vorgesehen sein.

Reibwerte und Vertrauensbereiche für zukünftig überrollten Untergrund werden Anhand der mit der Kamera identifizierten Untergrundklasse geschätzt. Mit der Radaufstandskraft wird dann ein Horizontalkraftpotential ermittelt. Liegt die Radaufstandskraft nicht aus Modellen der Dämpferregelung vor, so wird die Radaufstandskraft aus der Längs- und Querdynamik abgeschätzt oder ein fester Wert angenommen. Eine Übertragung von Horizontalkraftpotential (alternativ Reibwert) und Vertrauensbereich an die Schlupfregelung kann erfolgen.

Die Ablage der Reibwerte über Untergrundklasse im Navigationsspeicher mit Identifikation von kritischen Stellen kann erfolgen. Mögliche Ablageinformationen können sein:
Straße XYZ von A nach B ist 90% Asphalt und 10 % Beton. Der Asphalt hat einen Reibwert von 0,9 bei 20° Trockenheit und 0,5 bei Nässe. Anomalie bei km 2,5-2,65 Reibwert auf Asphalt unter 0,3 bei Nässe.

Es kann eine Kommunikation der Reibwerte über Untergrundklassen mit C2X (Car to X) ist möglich. Eine Korrektur der Reibwerte im C2X um Fahrzeugeigenschaften (BSP: FZG A 10% weniger, FZG B 10% mehr) kann ebenfalls erfolgen.

Die Automatische Anpassung der Reibwerte und Vertrauensbereiche für einzelne Streckenabschnitte an Klimabedingungen (z.B. Regen, Temperatur) kann ebenfalls vorgesehen sein.

Eine Anzeige lokal niedriger Reibwerte (kleiner als Schwellenwert) für den Fahrer (Aus C2X oder Navigationsspeicher) ist ebenfalls möglich.

Bei nur geringer Trajektorienabweichung kann eine automatische Vollbremsung niedrige Reibwerte umfahren oder unter Berücksichtigung des Reibwerts zu durchfahren, z.B. Sandspur.

Somit ist eine Reibwertschätzung unter Einbeziehung der Radaufstandskraft ermöglicht. Eine Extrapolation zukünftig geschätzter Reibwerte aus der Reibwert-Historie unter Einbeziehung des Kamerabildes ist ebenfalls ermöglicht. Die Ermittlung eines Horizontalkraftpotential aus dem geschätzten Reibwert und der ermittelten Radaufstandskraft ist ebenfalls vorteilsbringend. Eine Ansteuerung von Lenkung-, Antriebs- und/oder Bremseinrichtungen am Kraftfahrzeug kann nun unter Berücksichtigung der begrenzt der Horizontalkraft (Horizontalkraftpotential) erfolgen. Auch eine Rückmessung des sich einstellenden tatsächlichen Radschlupfes und/oder Schräglaufwinkels kann genutzt werden, um die tatsächliche Wirksamkeit der Schätzung zu überprüfen.

Die Clustering des Fahruntergrundes nach optischem Kamerabild und das darauf basierende Lernen des Reibwerts und der Zuverlässigkeit des Reibwerts erfolgt für verschiedene Untergruppen getrennt.

Als Weiterentwicklungen kann noch vorgesehen sein, dass der Austausch der ermittelten Reibwerte betreffend den Untergrund mit der Umgebung C2 X, WLAN oder Mobilfunk erfolgt.

Diese ausgesendeten Werte können dann in einem empfangenden Kraftfahrzeug um die jeweiligen Fahrzeugeigenschaften korrigierten werden. Dies kann auch durch die Klassifizierung über den Untergrund präzise erfolgen. Die Korrektur der Reibwerte bei Änderung der Umgebungsbedingungen anhand dieser Änderung (vor allem Umgebungstemperatur, Sonneneinstrahlung, Nässe) ist ebenfalls ermöglicht.

Für die Hinterachse ist es bei Geradeausfahrt möglich, den an der Vorderachse identifizierten Reibwert direkt an der Hinterachse ebenfalls zu verwenden. Dieses insbesondere bei Vollbremsung innerhalb der gleichen Spur bevorzugt durchgeführt.

Allein die Information, dass es vertikaler Fahrbahn Anregungen gab (Höhenprofil) lässt häufig auf eine Anomalie bei der Ermittlung des Reibwerts schließen (beispielsweise abheben des Rades). Diese vertikaler Fahrbahnanregung kann erfasst werden und der ermittelte Reibwert wird in einem solchen Fall nicht weiter für die Reibwertschätzung verwendet, sondern z.B. verworfen.

Insgesamt zeigt das Beispiel, wie durch die Erfindung ein Verfahren zur Reibwertschätzung basierend auf einer optischen Klassifizierung des Untergrundes bereitgestellt werden kann.

### Bezugszeichenliste

- 10: Kraftfahrzeug
- 11: Vorderrad
- 12: Hinterrad
- 13: Fahrzeugfront
- 14: Steuervorrichtung
- 15: Dämpferregelung
- 16: Dämpferregelung
- 17: Schlupfregelsystem
- 18: Umgebungserfassungseinrichtung
- 19: Kamera
- 20: Erfassungsbereich
- 21: Fahruntergrund Bereich
- 22: Bildverarbeitungseinrichtungen
- 23: Untergrundklasse
- 24: Fahrbahn
- 25: Höhenprofil
- 26: Radaufstandskraft
- 26': Radaufstandskraft
- 27: Straßenprofils
- 28: Horizontalkraft
- 29: Reibwertschätzung
- 30: Reibwert
- 30': Reibwert
- 31: Datenspeicher
- 32: statistischer Reibwerts
- 33: Vertrauenswert
- 34: Horizontalkraftpotential

## Patentansprüche

1. Verfahren zum Schätzen eines Reibwerts (30) einer Fahrbahn (24) mittels eines Kraftfahrzeugs (10), wobei eine Steuervorrichtung (14) des Kraftfahrzeugs (10)
- aus einem Schlupfregelsystem (17) einen ersten Schätzwert einer maximal mit einem Rad (11) des Kraftfahrzeugs (10) auf die Fahrbahn (24) übertragbaren Horizontalkraft (28) empfängt,
**dadurch gekennzeichnet, dass** die Steuervorrichtung (14)
- aus einer Dämpferregelung (15) einen zweiten Schätzwert einer Radaufstandskraft (26) des Rades (11) empfängt und
- den Reibwert (30) anhand der Schätzwerte aus der Radaufstandskraft (26) und der Horizontalkraft (28) als fahrzeugunabhängigen Reibwert (30) berechnet, wobei
- der Reibwert (30) an einem Vorderrad (11) des Kraftfahrzeugs (10) ermittelt wird und als prädizierter Reibwert an eine Steuervorrichtung (16) für ein Hinterrad (12) des Kraftfahrzeugs (10) übermittelt wird, sodass an dem Hinterrad die Steuervorrichtung (14) im Voraus einen prädizierten Reibwert (30) erhält.

2. Verfahren nach Anspruch 1, wobei der Reibwert (30) verworfen oder die Berechnung des Reibwerts (30) unterlassen wird, falls eine Radlastschwankung größer als ein vorbestimmter Höchstwert ist.

3. Verfahren nach einem der vorhergehenden Ansprüche, wobei die Steuervorrichtung (14) aus einer Umgebungserfassungseinrichtung (18) eine Klassenangabe (C1, C2) einer Untergrundklasse (23) eine Fahruntergrunds der Fahrbahn (24) empfängt und den berechneten Reibwert (30) in einem Datenspeicher (31) unter der Untergrundklasse (23) als statistischer Reibwert (32) abspeichert und bei einer Fahrt über eine weitere Fahrbahn, zu der die Umgebungserfassungseinrichtung (18) dieselbe Untergrundklasse (23) signalisiert, erneut einen Reibwert (30) berechnet und mit diesem den statistischen Reibwert (32) in dem Datenspeicher (31) rekursiv aktualisiert.

4. Verfahren nach Anspruch 3, wobei die Steuervorrichtung (14) die Klassenangabe (C1,C2) aus einer Bildverarbeitungseinheit (22) der Umgebungserfassungseinrichtung (18) empfängt, welche den Fahruntergrund optisch erfasst und klassifiziert.

5. Verfahren nach einem der Ansprüche 3 oder 4, wobei anhand des in dem Datenspeicher (31) gespeicherten Reibwerts (32) und der Radaufstandskraft (26) ein Wert der maximal verfügbaren Horizontalkraft (34) vorausberechnet und der Wert dem Schlupfregelsystem (17) als Prädiktion bereitgestellt wird.

6. Verfahren nach einem der Ansprüche 3 bis 5, wobei in dem Datenspeicher (31) zu jeder Untergrundklasse (23) zu deren statistischer Reibwert (32) ein Vertrauenswert (33) bereitgestellt wird und der Vertrauenswert (33) eine Streuung der in dem statistischen Reibwert (32) berücksichtigten Reibwerte (30) und/oder ein Konfidenzmaß der Klassenschätzung der Untergrundklasse (23) angibt und der statistische Reibwert (32) zusammen mit seinem Vertrauenswert (33) bereitgestellt wird.

7. Verfahren nach einem der Ansprüche 3 bis 6, wobei der gespeicherte statistische Reibwert (32) vor einer Bereitstellung an eine durch zumindest ein Sensorsignal signalisierte, aktuelle Klimabedingung angepasst wird.

8. Verfahren nach einem der vorhergehenden Ansprüche, wobei in einem Flächenbereich (21) der Fahrbahn (24) über das Vorderrad (11) ein Reibwert (30) kleiner als ein vorbestimmten Mindestwert erkannt wird und eine Lenkradsteuerung mit einem Lenksignal angesteuert wird, welches dazu ausgelegt ist, mit dem Hinterrad (12) den Flächenbereich (12) zu umfahren oder unter Berücksichtigung des Reibwerts mit einer vorbestimmten Radstellung zu durchfahren.

9. Steuervorrichtung (14) für ein Kraftfahrzeug (10), wobei die Steuervorrichtung (14) eine Prozessoreinrichtung aufweist, die dazu eingerichtet ist, ein Verfahren nach einem der vorhergehenden Ansprüche durchzuführen.

## Claims

1. Method for estimating a friction coefficient (30) of a roadway (24) by means of a motor vehicle (10), wherein a control device (14) of the motor vehicle (10)
- receives, from a slip control system (17), a first estimated value of a horizontal force (28) that is maximally transmittable by a wheel (11) of the motor vehicle (10) to the roadway (24),
**characterized in that** the control device (14)
- receives, from a damper control (15), a second estimated value of a wheel contact force (26) of the wheel (11), and
- calculates the friction coefficient (30) as a vehicle-independent friction coefficient (30) using the estimated values from the wheel contact force (26) and the horizontal force (28), wherein
- the friction coefficient (30) is determined at a front wheel (11) of the motor vehicle (10) and is transmitted as a predicted friction coefficient to a control device (16) for a rear wheel (12) of the motor vehicle (10) such that, at the rear wheel, the control device (14) receives a predicted friction coefficient (30) in advance.

2. Method according to claim 1, wherein the friction coefficient (30) is discarded or the calculation of the friction coefficient (30) is omitted if a wheel load fluctuation is greater than a predetermined maximum value.

3. Method according to any of the preceding claims, wherein the control device (14) receives, from an environment-recording apparatus (18), a class specification (C1, C2) of a surface class (23) of a driving surface of the roadway (24); stores the calculated friction coefficient (30) in a data memory (31) as a statistical friction coefficient (32) under the surface class (23); and, upon driving over a further roadway for which the environment-recording apparatus (18) signals the same surface class (23), recalculates a friction coefficient (30) and therewith recursively updates the statistical friction coefficient (32) in the data memory (31).

4. Method according to claim 3, wherein the control device (14) receives the class specification (C1, C2) from an image processing unit (22) of the environment-recording apparatus (18), which optically records and classifies the driving surface.

5. Method according to any of claims 3 or 4, wherein a value of the maximally available horizontal force (34) is predicted using the friction coefficient (32) stored in the data memory (31) and the wheel contact force (26), and the value is provided to the slip control system (17) as a prediction.

6. Method according to any of claims 3 to 5, wherein a confidence score (33) is provided in the data memory (31) for each surface class (23) in relation to its statistical friction coefficient (32), and the confidence score (33) indicates a scatter of the friction coefficients (30) taken into account in the statistical friction coefficient (32), and/or indicates a confidence measure of the class estimation of the surface class (23), and the statistical friction coefficient (32) is provided together with its confidence score (33).

7. Method according to any of claims 3 to 6, wherein, before being provided, the stored statistical friction coefficient (32) is adapted to a current climatic condition signaled by at least one sensor signal.

8. Method according to any of the preceding claims, wherein a friction coefficient (30) that is smaller than a predetermined minimum value is detected in a surface region (21) of the roadway (24) via the front wheel (11), and a steering wheel controller is activated with a steering signal that is designed to make the rear wheel (12) either avoid the surface region (12) or traverse it with a predetermined wheel position under consideration of the friction coefficient.

9. Control device (14) for a motor vehicle (10), wherein the control device (14) has a processor apparatus that is configured to implement a method according to any preceding claim.

## Revendications

1. Procédé pour estimer un coefficient de frottement (30) d'une chaussée (24) au moyen d'un véhicule à moteur (10), dans lequel un dispositif de commande (14) du véhicule à moteur (10)
- reçoit à partir d'un système anti-patinage (17) une première valeur estimée d'une force horizontale (28) pouvant être transmise au maximum au moyen d'une roue (11) du véhicule à moteur (10) à la chaussée (24),
**caractérisé en ce que** le dispositif de commande (14)
- reçoit à partir d'une régulation d'amortissement (15) une deuxième valeur estimée d'une force d'appui au sol de roue (26) de la roue (11) et
- calcule le coefficient de frottement (30) au moyen des valeurs estimées de la force d'appui au sol de roue (26) et de la force horizontale (28) comme coefficient de frottement (30) indépendant du véhicule, dans lequel
- le coefficient de frottement (30) sur une roue avant (11) du véhicule à moteur (10) est déterminé et transmis comme coefficient de frottement prédit au dispositif de commande (16) pour une roue arrière (12) du véhicule à moteur (10), de sorte que, sur la roue arrière, le dispositif de commande (14) reçoit d'avance un coefficient de frottement (30) prédit.

2. Procédé selon la revendication 1, dans lequel le coefficient de frottement (30) est rejeté ou le calcul du coefficient de frottement (30) est omis, si une variation de charge de roue est supérieure à une valeur maximale prédéterminée.

3. Procédé selon l'une quelconque des revendications précédentes, dans lequel le dispositif de commande (14) reçoit à partir d'un dispositif de détection de l'environnement (18) une indication de classe (C1, C2) d'une classe de sol (23) d'une surface de roulement de la chaussée (24) et mémorise le coefficient de frottement (30) calculé dans une mémoire de données (31) comme coefficient de frottement statique (32) sous la classe de sol (23), et lors d'une conduite sur une autre chaussée, pour laquelle le dispositif de détection de l'environnement (18) signale la même classe de sol (23), un coefficient de frottement (30) est calculé à nouveau et le coefficient de frottement statique (32) dans la mémoire de données (31) est actualisé avec celui-ci.

4. Procédé selon la revendication 3, dans lequel le dispositif de commande (14) reçoit l'indication de classe (C1, C2) à partir d'une unité de traitement d'images (22) du dispositif de détection de l'environnement (18), lequel détecte optiquement et classifie la surface de roulement.

5. Procédé selon l'une quelconque des revendications 3 ou 4, dans lequel une valeur de la force horizontale (34) maximale disponible est calculée au préalable au moyen du coefficient de frottement (32) mémorisé dans la mémoire de données (31) et la force d'appui au sol de roue (26) et la valeur est fournie au système anti-patinage (17) comme prédiction.

6. Procédé selon l'une quelconque des revendications 3 à 5, dans lequel une valeur de confiance (33) est fournie dans la mémoire de données (31) pour chaque classe de sol (23) pour le coefficient de frottement statique (32) de celle-ci et la valeur de confiance (33) indique une dispersion des coefficients de frottement (30) pris en considération dans le coefficient de frottement statique (32) et/ou une mesure de confiance de l'estimation de classe de la classe de sol (23) et le coefficient de frottement statique (32) est fourni ensemble avec sa valeur de confiance (33).

7. Procédé selon l'une quelconque des revendications 3 à 6, dans lequel le coefficient de frottement statique (32) mémorisé est, avant la fourniture, ajusté à une condition climatique actuelle signalisée par au moins un signal de capteur.

8. Procédé selon l'une quelconque des revendications précédentes, dans lequel, dans une zone de surface (21) de la chaussée (24), un coefficient de frottement (30) inférieur à une valeur minimale prédéterminée est détecté au moyen de la roue avant (11) et une commande de volant est commandée au moyen d'un signal de direction, lequel est conçu pour que la zone de surface (12) soit contournée ou traversée dans une position de roue prédéterminée en tenant compte du coefficient par la roue arrière (12).

9. Dispositif de commande (14) pour un véhicule à moteur (10), dans lequel le dispositif de commande (14) présente un dispositif à processeur, qui est configuré pour exécuter un procédé selon l'une quelconque des revendications précédentes.
